# EUROPÄISCHE PATENTSCHRIFT

(11) **EP 0 409 818 B1**
(45) Veröffentlichungstag und Bekanntmachung des Hinweises auf die Patenterteilung: **25.08.1993**
(21) Anmeldenummer: 90890213.3
(22) Anmeldetag: 18.07.1990
(51) Int. Cl.: B01J 19/20, B01J 3/04, C11D 13/00, B29B 9/06, B01F 11/00, B29B 7/42

(54) **Verfahren und Einrichtung zur Stoffbehandlung bzw.-reaktion**
Process and apparatus for materialtreatment or-reaction
Procédé et dispositif de traitement ou de réaction de matériau

(30) Priorität: 21.07.1989 AT 1763/89
(43) Veröffentlichungstag der Anmeldung: 23.01.1991
(73) Patentinhaber: Österreichisches Forschungszentrum Seibersdorf Ges.m.b.H., 1010 Wien (AT)
(72) Erfinder: Zemann, Helmut, Dr., A-1160 Wien (AT); Lichtl, Hans, A-1180 Wien (AT)

(56) Entgegenhaltungen:
- DE-A- 1 442 688
- DE-A- 2 303 120
- NL-A- 7 110 910
- US-A- 4 390 375

## Beschreibung

Die Erfindung betrifft ein Verfahren zur Behandlung bzw. chemischen oder physikalischen Reaktion von Stoffen bzw. Stoffgemischen, insbesondere Verbindungen, Lösungen, Schlämmen oder Emulsionen, wobei die Stoffe bzw. Stoffgemische einem Ende einer rohrförmigen Behandlungs- bzw. Reaktionseinrichtung zugeführt werden und an deren anderem Ende, vorzugsweise nach einer thermischen Behandlung, ausgetragen werden, und wobei im Rohr der Behandlungseinrichtung die Stoffe bzw. Stoffgemische mit zumindest einer rotierenden Wendel beaufschlagt bzw. weiterbewegt werden. Ferner betrifft die Erfindung eine rohrförmige Behandlungs- bzw. Reaktionseinrichtung zur Behandlung bzw. chemischen oder physikalischen Reaktion von Stoffen bzw. Stoffgemischen, insbesondere Verbindungen, Lösungen oder Emulsionen, an deren einem Ende Zufuhreinrichtungen für die Stoffe bzw. Stoffgemische vorgesehen sind und an deren anderem Ende die gegebenenfalls einer thermischen Behandlung unterzogenen Stoffe bzw. Stoffgemische bzw. Reaktionsprodukte ausgetragen werden, wobei im Rohr der Behandlungseinrichtung zumindest eine rotierende Wendel längsverlaufend angeordnet ist.

Aus der DE-A1-1442688 ist eine Vorrichtung zur Behandlung von Flüssigkeiten und pulverförmigen Massen bekannt, umfassend zumindest eine in einem ortsfesten oder drehbaren rohrartigen Gehäuse drehbar angeordnete, schraubenförmige Wendel, welche kernlos ausgebildet und einseitig angetrieben ist. Dabei können auch mindestens zwei Wendeln parallel zueinander in einem gemeinsamen Gehäuse angeordnet sein, die mit ihren Gängen ineinandergreifen. Derartige bekannte Einrichtungen besitzen lediglich einen geringen Wirkungsgrad und erfordern somit lange Zeiten, um die gewünschten Reaktionen herbeizuführen.

Erfindungsgemäß ist ein Verfahren der eingangs genannten Art dadurch gekennzeichnet, daß die Stoffe bzw. Stoffgemische im Rohr mit zumindest zwei in Rohrlängsrichtung relativ zueinander eine Oszillationsbewegung durchführenden, ineinander verschraubt angeordneten Wendeln beaufschlagt bzw. weiterbewegt werden, daß die Stoffe bzw. Stoffgemenge, vorzugsweise unter Druck, kontinuierlich in das Rohr eingespeist werden und daß gegebenenfalls die behandelten bzw. ausreagierten Stoffe bzw. Stoffgemische bzw. die Reaktionsprodukte am Austragende des Rohres durch eine Düse ausgetragen bzw. verdüst werden. Eine Einrichtung der eingangs genannten Art ist erfindungsgemäß dadurch gekennzeichnet, daß im Rohr zumindest zwei in Rohrlängsrichtung relativ zueinander eine Oszillationsbewegung durchführende, in einander verschraubt angeordnete, vorzugsweise idente Wendeln vorgesehen sind, daß als Zufuhreinrichtungen für die Stoffe bzw. Stoffgemische kontinuierlich fördernde Druckfördereinrichtungen, vorzugsweise Druckpumpen, vorgesehen sind und daß gegebenenfalls am Austragsende des Rohres eine Expansionsdüse angeordnet bzw. ausgebildet ist.

Erfindungsgemäß werden die Stoffe bzw. Stoffgemische mit den vorgesehenen Wendeln sehr gut durchmischt bzw. in Reaktion gebracht und gleichzeitig dabei rasch durch das Reaktionsrohr befördert. Gleichzeitig liegt bei dem vorgesehenen beheizbaren und/oder kühlbaren Reaktionsrohr die Wärmeeinbringfläche bzw. Wärmeabfuhrfläche im Verhältnis zum Querschnitt des Rohres sehr günstig; sodaß eine effiziente und genaue Temperaturkontrolle der Reaktionen ermöglicht wird. Durch die kontinuierlich und unter genauer Druckeinstellung erfolgende Einspeisung der Stoffe bzw. Stoffgemische kann eine genaue Durchsatzregelung und Verweilzeiteinstellung für diese Stoffe im Reaktionsrohr erzielt werden, sodaß auch durch diese Maßnahmen die Verfahrensführung optimiert werden kann.

Das erfindungsgemäße Verfahren und die erfindungsgemäße Vorrichtung können für eine Vielzahl von chemischen und/oder physikalischen Reaktionen eingesetzt werden; z.B. kann die Reaktion von mehreren Stoffen erfolgen; aus mehreren Stoffen kann einer dieser Stoffe abgetrennt werden; die Reaktionsprodukte, z.B. gasförmige, feste und flüssige, Reaktionsprodukte können nach der Reaktion leicht getrennt werden.So eignen sich das erfindungsgemäße Verfahren bzw. die Vorrichtung z.B. zum Färben von Stoffen, zur Zerlegung oder Vereinigung von Stoffen, zur Herstellung von Seife, zum Abdampfen von Lösungsmittel, zum Schnapsbrennen, zur Trocknung von Substanzen, zur Herstellung von Verbindungen, zur Herstellung von verarbeitungsfähigen Kunststoffen bzw. Kunststoffgranulaten (aus Harzen und Härtern) und für viele andere Einsatzmöglichkeiten. Je nach Art der Reaktion sind die anfallenden Endprodukte gasförmig, flüssig oder fest.

Erfindungsgemäß ist vorgesehen, daß zur Herstellung von Seife beim Beschickungsende des Rohres Speisefett- bzw. -ölreste und Lauge, vorzugsweise KOH NaOH oder LiOH, mit einem Druck zwischen 2 bis 200 bar zugeführt werden, welche Stoffe bei Temperaturen zwischen 260 und 300°C durch das Reaktionsrohr durchbewegt und dabei verseift werden.

Für die Kunststoffherstellung ist vorgesehen, daß zur Herstellung von Kunststoffgranulat dem Beschickungsende des Rohres Harz und Härter, insbesondere getrennt, zugeführt werden, welche Komponenten im Rohr auf eine Temperatur bis etwa 150° bzw. auf eine vorgegebene Reaktionstemperatur erwärmt bzw. bei exothermer Reaktion entsprechend gekühlt werden, und daß zur Ausbildung des Granulates eine Verdüsung der Reaktionsmasse erfolgt.

Es ist möglich, den Stoffen Zusätze hinzuzufügen, wofür insbesondere Schutzgas, Schutzflüssigkeit, Katalysatoren, Pigmente, Weichmacher oder andere Zusätze in Frage kommen.

Die im Reaktionsrohr vorgesehenen Wendeln können in ihrem Querschnitt rund bzw. gerundet bzw. elliptisch ausgebildet sein oder auch bandförmig vorliegen. Im letzteren Fall ist vorgesehen, daß die Wendeln von jeweils einem Teil eines in Längsrichtung verdrehten bzw. verdrillten Metallbandes gebildet sind, das längs einer neutralen Ebene, d.h. in einer Ebene, die beim unverdrillten Band in Längsrichtung und senkrecht auf seine breitere Fläche durch das Band verläuft, geteilt bzw. auseinandergeschnitten wurde.

Durch entsprechende Ausbildung eines Gegendruckes am Ende des Reaktionsrohres, insbesondere durch Anordnung einer Düse mit veränderlichem Querschnitt, kann die Größe der Reaktionsprodukte, die Durchsatzzeit der Stoffe und somit deren Reaktionen beeinflußt werden. Vorteilhafterweise besitzt die Düse einen Querschnitt von 0,1 bis 6 mm, wobei vorgesehen ist, daß die Wendeln im Rohr sich um die Rohrachse mit einer Umdrehungsgeschwindigkeit von 0,5 bis 25 Upm drehen. Zur Verstellung des Düsenquerschnittes können verschiedene bekannte Einrichtungen vorgesehen sein.

Zweckmäßigerweise ist vorgesehen, daß im oder am Rohr eine Heizeinrichtung und/oder Kühleinrichtung ausgebildet ist oder das Rohr selbst aus einem Kaltleitermaterial besteht. Dabei kann die Beheizung des Rohres mit Heißdampf, heißen Abgasen od.dgl. erfolgen, insbesondere also mit Überschußwärme, wie sie bei Industrieprozessen vorhanden ist.

Zur Erleichterung der Prozeßführung und genauen Einregelung der Parameter ist erfindungsgemäß vorgesehen, daß eine Steuereinrichtung zur Einregelung der Temperatur und/oder des Druckes im Rohr und/oder der Menge der dem Rohr zugführten Stoffe an die Zufuhreinrichtungen bzw. die Heiz- und Kühleinrichtung angeschlossen ist.

Weitere bevorzugte Ausführungsformen der Erfindung sind der folgenden Beschreibung, den Patentansprüchen und der Zeichnung zu entnehmen.

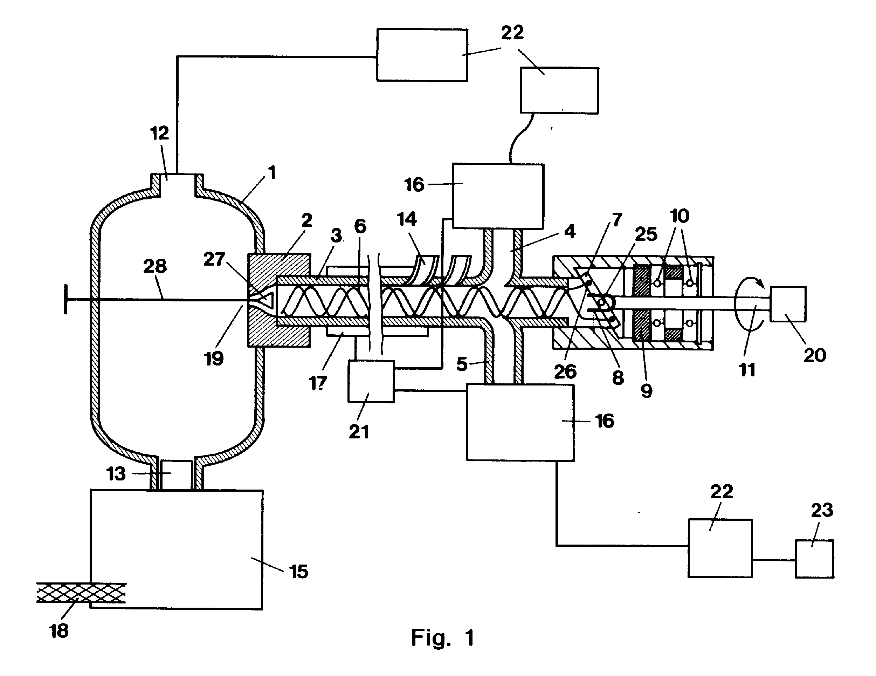

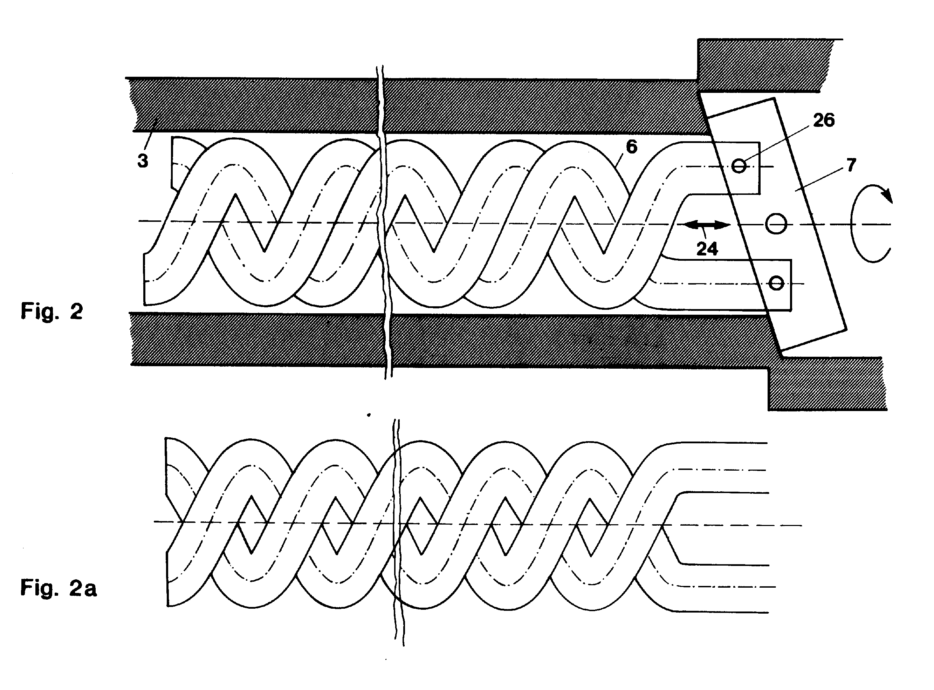

Im folgenden wird die Erfindung anhand der Zeichnung beispielsweise näher erläutert. Es zeigen Fig.1 eine schematische Anordung einer erfindungsgemäßen Einrichtung und Fig.2 und 2a Detailansichten der im Reaktionsrohr angeordneten Wendeln.

Fig.1 zeigt ein Ausführungsbeispiel einer erfindungsgemäßen Einrichtung. Über Zufuhrleitungen 4,5 können zwei Stoffe, Stoffgemische oder Verbindungen getrennt in ein Reaktionsrohr 3 eingeführt werden. Die Zufuhr dieser Stoffe erfolgt mittels Druckfördereinrichtungen 16, insbesondere Druckpumpen, aus entsprechenden Tanks bzw. Vorratsbehältern 22. Wenn es sich um Substanzen handelt, die dem Tank eine entsprechende Aufbereitungs- oder Reinigungsanlage, z.B. ein Sieb 23, vorgeordnet sein. Das Rohr 3 ist mit einer Heiz- und/oder Kühleinrichtung 17 umgeben oder ist in seiner Wand mit entsprechenden Heizeinrichtungen z.B. Heizdrähten bzw. Kühlrohren versehen. Es ist auch möglich, das Rohr 3 aus Kaltleitmaterial auszubilden und direkt durch Stromzufuhr aufzuheizen. Die Steuerung der Heizung und Kühlung des Rohres 3 bzw. der Zufuhreinrichtungen 16 erfolgt mittels einer Steuereinrichtung 21.

Wie Fig.1 ferner zu entnehmen ist, können weitere Zufuhrleitungen 14 vorgesehen sein, die von nicht dargestellten Zufuhreinrichtungen, ähnlich den Zufuhreinrichtungen 16, angespeist werden, um Zusatzstoffe im Zuge der Behandlung den Stoffen und Stoffgemischen zuzusetzen.

Im Rohr 3 sind zwei oder mehr Wendeln 6angeordnet, wie sie in Fig.2 und 2a deutlich dargestellt sind. Die Wendeln 6 bestehen aus um eine Längsachse verdrehten, gegebenenfalls runden oder elliptischen Querschnitt aufweisenden Stäben oder aus den Teilen eines verdrehten bzw. verdrillten Metallbandes, das in seiner Mitte in Längsrichtung entzweigeschnitten wurde, womit zwei idente Wendeln gebildet sind. Die Wendeln 6 sind im Rohr 3 ineinander verschraubt angeordnet, wobei jedoch eine Relativbewegung zwischen den beiden Wendeln in Richtung des Pfeiles 24 stattfinden kann. Diese Relativbewegung erfolgt im vorliegenden Fall durch eine Taumelscheibe 7, die sich an einer schrägen Fläche des Rohres 3 abstützt und in die Fortsätze 25 einer Mitnehmergabel 8 ragen, die von einem Motor 20 über dessen Antriebswelle 11 angetrieben wird. Die Wendeln 6 sind dabei an der Taumelscheibe 7 an Anlenkpunkten 26 diametral einander gegenüber angelenkt, sodaß bei einer Umdrehung der Taumelscheibe 7 eine Relativbewegung der Wendeln 6 erfolgen kann. Die Antriebswelle 11 des Motors 20 ist über Dichtungen 9 und eine Lagerung 10 geführt.

Prinzipiell ist es auch möglich, an die Taumelscheibe 7 einen Motor 20 anzuschließen, dessen Welle 11 senkrecht zur Taumelscheibe 7 steht, sodaß die Mitnehmergabel 8 entbehrlich wird. Auch mit einem derart ausgebildeten Antrieb ist eine periodische axiale Relativbewegung der beiden Wendeln gegeneinander möglich, wobei gleichzeitig die Wendeln im Rohr 3 um die Rohrachse gedreht werden. Sind mehr als zwei Wendeln an der Taumelschiebe 7 vorgesehen, so werden diese an entsprechenden Umfangsstellen vorteilhafterweise gleichmäßig verteilt angelenkt. Abgesehen von einem Reinigungsprozeß im Rohr 3 erfolgt durch die Wendeln 6 eine gute Durchmischung der eingebrachten Reaktionskomponenten.

Im austragseitigen Endbereich des Rohres 3 ist eine Düse 2 am Rohr 3 angeordnet; die Düse 2 kann auch vom Rohrende selbst gebildet sein. In der Düse 2 ist eine Einrichtung 19, vorzugsweise ein Verschlußkegel 27, angeordnet, der über eine Stange 28 verstellt werden kann, um damit den Düsenquerschnitt verstellen zu können.

Durch Einstellung des Querschnittes der Düse 2 kann erreicht werden, daß feste Endprodukte als Granulate bzw. Kleinstteile mit gewünschter Korngröße vorliegen.

Die Düse 2 bzw. das Ende des Rohres 3 ragt in ein Austrags- bzw. Expansionsgefäß 1, in das die ausreagierten Stoffe in fester, gasförmiger flüssiger Form austreten und expandieren können. Gasförmige Stoffe treten durch eine Auslaßöffnung 12 in eine zu einem Kondensator 22 führende Leitung; Flüssigkeiten und Feststoffe können durch eine gegebenenfalls vorhandene Schleuse 13 in eine Austragkammer 15 übergeführt werden, in der gegebenenfalls eine Schutzgasatmosphäre, z.B. CO₂ herrscht. Mittels einer Austrageinrichtung 18, z.B. einer Förderschnecke, können diese Stoffe ihrer Verwertung zugeführt werden. Anstelle des Kondensators 22 oder zusätzlich dazu kann auch eine Absaugung der gasförmigen und/oder flüssigen Bestandteile aus dem Expansionsgefäß 1 erfolgen.

Die erfindungsgemäße Anlage und das erfindungsgemäße Verfahren sind geeignet für eine Vielzahl chemisch physikalischer Reaktionen zwischen Stoffen fester, flüssiger oder gasförmiger Art. Je nach Art und Anzahl der Stoffe und der durchzuführenden Reaktionen sind eine oder mehrere Zuführungen 5,14 in das Reaktionsrohr 3 notwendig.

Durch die Verfahrensführung unter Druck entsteht längs der Wendeln 6 eine rotierende Strömung, die einerseits die zu reagierenden Stoffe mit sichnimmt und andererseits durch die Zentrifugalkraft eine Trennwirkung auf die Stoffe ausübt. Je nach Wunsch können durch die Änderung des Druckes bzw. Rotation der Wendeln verschiedene Trennwirkungen erreicht werden.

Im folgenden wird die Erfindung anhand der Herstellung von Seife, ausgehend von Speisefett- bzw. -ölresten näher erläutert. Nach einer allenfalls durchgeführten Abtrennung von Verunreinigungen, Z.B. Kunststoffen, Papierresten, wie sie bei der Sammlung von Altfetten bzw. Altölen anfallen, insbesondere auch nach einer Abtrennung von mineralischen Bestandteilen und Mineralölen in der Abscheideeinrichtung 23, wird das Speisefett und/oder -öl gegebenenfalls in einem Tank 22 gelagert und aus diesem mit der Druckpumpe 16 über die Leitung 5 in das Rohr 3 eingespeist. Gleichzeitig wird aus einem Laugenbehälter 22 KOH NaOH oder LiOH dem Rohr 3 mit der weiteren Druckpumpe 16′ zugeführt. Der Druck wird zwischen 5 bis 8 bar gehalten. Diese Stoffe werden durch das Rohr 3 weiterbefördert, wobei die Temperatur in der Rohrmitte zwischen 285 bis 290°C beträgt. Bei dieser Vorgangsweise erhält man bei einer Düsenöffnung von 1 bis 2 mm Seifengranulat mit 1 bis 2 mm Durchmesser in einer Menge von etwa 10 kg pro Stunde. Je nach der Konsistenz des zugeführten Altfettes wird der Druck geregelt; ist das Fett dickflüssing, Z.B. Talg, so ist eine entsprechende Druckerhöhung erforderlich. Nicht zweckmäßig ist es, wenn Mineralöl in den Altfetten enthalten ist, wodurch die Verseifbarkeit beeinträchtigt wird.

Die aus der Düse 2 austretenden Seifenkügelchen werden durch die Schleuse 13 in den Auffangraum 15 ausgetragen, in dem eine CO₂-Atmosphäre herrscht; durch die Carbonatisierung der Oberfläche der Seifenkügelchen wird deren Qualität verbessert.

Bei der Herstellung von Kunststoffgranulat werden dem Rohr 3 Harz und Härter zugeführt und die Temperatur im Rohr 3 wird durch entsprechende Heizung und Kühlung, je nachdem ob es sich um exotherme oder endotherme Reaktionen handelt, mittels der Steuereinrichtung 21 eingestellt. Durch entsprechendes Auspressen durch die Düse 2 und entsprechende Einstellung der Verfahrensparameter wird im Auffangraum 1 Kunststoffgranulat erhalten, das entsprechend ausgetragen wird.

Insbesondere für die Kunststoffherstellung ist es wichtig, wenn in das Rohr zusätzlich zu den Komponenten des Kunststoffes noch Katalysatoren, Pigmente, Weichmacher od. andere Zusätze zugeführt werden können, was bei der vorliegenden erfindungsgemäßen Einrichtung mit Druckzufuhreinrichtungen ohne weiters möglich ist.

Es ist mit der erfindungsgemäßen Vorgangsweise gut möglich, (Salz)Lösungen einzudicken, indem die Lösungsmittel abdestilliert bzw. verdampft werden und die feste Substanz im Auffangbehälter 1 abgeschieden wird.

Unter Stoffen und Stoffgemischen sind z.B auch Schlämme bzw. Fäkalienschlämme zu verstehen, die allenfalls vor ihrer Behandlung homogenisiert werden können.

## Patentansprüche

1. Verfahren zur chemischen oder physikalischen Behandlung von Stoffen bzw. Stoffgemischen, insbesondere Verbindungen, Lösungen, Schlämmen oder Emulsionen, wobei die Stoffe bzw. Stoffgemische einem Ende einer rohrförmigen Behandlungs- bzw. Reaktionseinrichtung zugeführt werden und an deren anderem Ende, vorzugsweise nach einer thermischen Behandlung, ausgetragen werden, und wobei im Rohr der Behandlungseinrichtung die Stoffe bzw. Stoffgemische mit zumindest einer im Rohr rotierenden Wendel beaufschlagt bzw. weiterbewegt werden, dadurch gekennzeichnet, daß die Stoffe bzw. Stoffgemische im Rohr mit zumindest zwei in Rohrlängsrichtung relativ zueinander eine Oszillationsbewegung durchführenden, ineinander verschraubt angeordneten Wendeln beaufschlagt bzw. weiterbewegt werden, daß die Stoffe bzw. Stoffgemische, vorzugsweise unter Druck, kontinuierlich in das Rohr eingespeist werden und daß gegebenenfalls die behandelten bzw. ausreagierten Stoffe bzw. Stoffgemische bzw. die Reaktionsprodukte am Austragende des Rohres durch eine Düse ausgetragen bzw. verdüst werden.

2. Verfahren nach Anspruch 1, dadurch gekennzeichnet, daß die Stoffe bzw. Stoffgemische mit einem Druck von 2 bis 200 bar, vorzugsweise von 5 bis 150 bar, zugeführt werden-und/oder daß den Stoffen bzw. Stoffgemischen im Rohr Schutzgas, Schutzflüssigkeit, Katalysatoren, Pigmente, Weichmacher und/oder andere Zusätze hinzugefügt werden.

3. Verfahren nach Anspruch 1 oder 2, dadurch gekennzeichnet, daß die aus dem Rohr ausgetragenen Stoffe bzw. Stoffgemische bzw. Reaktionsprodukte insbesondere nach einer Expansion der Gasbestandteile in eine z.B. aus CO₂ bestehende Schutzgasatmosphäre oder in eine Schutzflüssigkeit geführt werden.

4. Verfahren nach einem der Ansprüche 1 bis 3, dadurch gekennzeichnet, daß die Wendeln im Rohr mit einer Umdrehungsgeschwindigkeit von 0,5 bis 25 Upm gedreht werden.

5. Verfahren nach einem der Ansprüche 1 bis 4, dadurch gekennzeichnet, daß zur Herstellung von Seife beim Beschickungsende des Rohres als Stoffe Speisefett- bzw. -ölreste und Lauge, vorzugsweise KOH, NaOH oder LiOH, insbesondere getrennt, zugeführt werden, wobei gegebenenfalls die Stoffe bzw. Stoffgemische zur Seifenherstellung im Rohr auf 260° bis 300°, vorzugsweise 280° bis 300°C, erwärmt werden und gegebenenfalls der Gehalt an Mineralöl und/oder nicht verseifbaren Bestandteilen in den zugeführten Speisefett- bzw. -ölresten kleiner als 1%, vorzugsweise kleiner als 0,5%, ist.

6. Verfahren nach einem der Ansprüche 1 bis 4, dadurch gekennzeichnet, daß zur Herstellung von Kunststoffgranulat dem Beschickungsende des Rohres Harz und Härter, insbesondere getrennt, zugeführt werden, welche Komponenten auf eine Temperatur von maximal 150° bzw. auf eine vorgegebene Reaktionstemperatur erwärmt bzw. bei exothermer Reaktion gekühlt werden, und daß zur Ausbildung des Granulates eine Verdüsung der Reaktionsmasse erfolgt.

7. Rohrförmige Behandlungs- bzw. Reaktionseinrichtung zur Behandlung bzw. chemischen oder physikalischen Reaktion von Stoffen bzw. Stoffgemischen, insbesondere Verbindungen, Lösungen, Schlämmen oder Emulsionen, an deren einem Ende Zufuhreinrichtungen für die Stoffe bzw. Stoffgemische vorgesehen sind und an deren anderem Ende die gegebenenfalls einer thermischen Behandlung unterzogenen Stoffe bzw. Stoffgemische bzw. Reaktionsprodukte ausgetragen werden, wobei im Rohr der Behandlungseinrichtung zumindest eine Wendel längsverlaufend und rotierend angeordnet ist, insbesondere zur Durchführung des Verfahrens nach einem der Ansprüche 1 bis 6, dadurch gekennzeichnet, daß im Rohr (3) zumindest zwei in Rohrlängsrichtung relativ zueinander eine Oszillationsbewegung durchführende, ineinander verschraubt angeordnete, vorzugsweise ident ausgebildete Wendeln (6) vorgesehen sind, daß als Zufuhreinrichtungen für die Stoffe bzw. Stoffgemische kontinuierlich fördernde (Druck)Fördereinrichtungen (16), vorzugsweise Druckpumpen, vorgesehen sind und daß gegebenenfalls am Austragsende des Rohres (3) eine Expansionsdüse (2) angeordnet, vorzugsweise aufgesetzt, bzw. ausgebildet ist.

8. Einrichtung nach Anspruch 7, dadurch gekennzeichnet, daß zum Antrieb der Wendeln (6) ein Motor (20) vorgesehen ist, dessen Drehachse mit der Rohrachse fluchtet und der eine vor bzw. auf dem motorseitigen, abgeschrägten Ende des Rohres angeordnete bzw. aufliegende, im Winkel zur Rohr- bzw. Motorachse angestellte drehbare Achse bzw. Taumelscheibe (7) antreibt, an der, insbesondere an diametral gegenüberliegenden Punkten, die Wendeln (6) befestigt sind, wobei gegebenenfalls die Wendeln (6) von jeweils einem Teil eines in Längsrichtung verdrehten bzw. verdrillten Metallbandes gebildet sind, das längs einer neutralen Ebene, d.h. in einer Ebene, die beim unverdrillten Band in Längsrichtung und senkrecht auf seine breitere Fläche durch das Band verläuft, geteilt bzw. auseinandergeschnitten wurde.

9. Einrichtung nach Anspruch 7 oder 8, dadurch gekennzeichnet, daß in der Rohrwand und/oder am Rohr (3) eine Heizeinrichtung (17) und/oder Kühleinrichtung ausgebildet ist oder das Rohr (3) selbst aus einem Kaltleitermaterial besteht und/oder daß die Beheizung des Rohres (3) mit Heißdampf, heißen Abgasen od.dgl. erfolgt.

10. Einrichtung nach einem der Ansprüche 7 bis 9, dadurch gekennzeichnet, daß eine Steuereinrichtung (21) zur Einregelung der Temperatur und/oder des Druckes im Rohr und/oder der dem Rohr zugeführten Stoffmengen an die Zufuhreinrichtungen (16) bzw. die Heiz- bzw. Kühleinrichtung (17) angeschlossen ist.

11. Einrichtung nach einem der Ansprüche 7 bis 10, dadurch gekennzeichnet, daß das Rohr (3) mit weiteren Zufuhreinrichtungen bzw. Komponentenzuläufen (14) zur vorzugsweise unter Druck erfolgenden Zufuhr von Schutzgasen und/oder Schutzflüssigkeiten und/oder gegebenenfalls erwärmter Luft und/oder Katalysatoren und/oder Pigmenten und/oder Weichmachern und/oder anderen Zusätzen versehen ist, wobei gegebenenfalls zur Herstellung von Seife aus Speisefett- bzw. -ölresten das Rohr (3) mit einem eigenen Komponentenzulauf (4) für die Speisefett- bzw. -ölreste und mit einem eigenen Komponentenzulauf (5) für eine Lauge, z.B. KOH, NaOH, LiOH, ausgebildet ist.

12. Einrichtung nach einem der Ansprüche 7 bis 11, dadurch gekennzeichnet, daß an das Austragende des Rohres ein Auffang- bzw. Expansionsbehälter (1) angeschlossen ist, in dem die aus dem Rohr (3) austretenden Stoffe bzw. Stoffgemische bzw. Reaktionsprodukte expandiert und aufgefangen werden, wobei gegebenenfalls im unteren Bereich des Auffangbehälters (1) eine Austrageinrichtung (18), z.B. eine Förderschnecke, oder eine Schleuse (13) angeordnet ist, welche Schleuse (13) in eine vorteilhafterweise mit Schutzgas oder Schutzflüssigkeit geflutete Auffangkammer (15) mündet.

13. Einrichtung nach einem der Ansprüche 7 bis 12, dadurch gekennzeichnet, daß an das Rohr (3) bzw. an den Auffang- bzw. Expansionsraum (1) ein Dampf- bzw Brüdenkondensator (22) und/oder eine Absaugeinrichtung angeschlossen ist.

14. Einrichtung nach einem der Ansprüche 7 bis 13, dadurch gekennzeichnet, daß der Düsenquerschnitt bzw. -durchmesser insbesondere zur Einstellung einer gewünschten Partikelgröße der Reaktionsprodukte mit einer Verstelleinrichtung (19) veränderbar bzw. einstellbar ist, und/oder die Düse (2) 0,1 bis 6 mm Durchmesser besitzt und/oder die Länge des Rohres (3) 0,5 bis 2 m und die lichte Weite des Rohres (3) 8 bis 20 mm beträgt.

15. Einrichtung nach einem der Ansprüche 7 bis 14, dadurch gekennzeichnet, daß das Rohr (3) zum Austreiben eines Lösungsmittels, z.B. zur Salzherstellung, oder zum Verdampfen einer Komponente eines Stoffes, z.B. beim Schnapsbrennen, anstelle der Zufuhreinrichtungen lediglich einen Stoffeinlaß besitzt.

16. Einrichtung nach einem der Ansprüche 7 bis 15, dadurch gekennzeichnet, daß an das Rohr (3) ein Kunststoffextruder angeschlossen ist, an dessen Materialzufuhranschluß das Austragsende des Rohres (3) angeschlossen ist.

## Claims

1. A process for the chemical or physical treatment of materials or material mixtures, in particular compounds, solutions, sludges or emulsions, the materials or material mixtures being charged into one end of a tubular treatment or reaction apparatus and discharged on its other end, preferably following a thermal treatment and the materials or material mixtures being subjected to and advanced by at least one helix rotating in the pipe, characterized in that the materials or material mixtures are subjected to and advanced by at least two helixes screwed into one another and performing an oscillating motion in relation to one another in the longitudinal direction of the pipe, that the materials or material mixtures are continuously fed into the pipe, preferably under pressure, and that optionally, the treated or reacted materials or material mixtures or the reaction products are discharged or atomized at the discharge end of the pipe by means of a nozzle.

2. The process according to claim 1, wherein the materials or material mixtures are charged at a pressure of from 2 to 200 bar, preferably of from 5 to 150 bar,and/or protective gas, protective liquid, catalysts, pigments, plasticizers and/or other additives are added to the materials or material mixtures in the pipe.

3. The process according to claim 1 or 2, wherein the materials or material mixtures or reaction products discharged from the pipe are passed, in particular following an expansion of the gas components, into a protective gas atmosphere consisting for instance of CO₂ or a protective liquid.

4. The process according to any one of the claims 1 to 3, wherein the helixes are rotated in the pipe at a rotating speed of from 0.5 to 25 rpm.

5. The process according to any one of the claims 1 to 4, wherein for the production of soap, substances such as scraps of edible fats and oils and alkaline solutions, preferably KOH, NaOH or LiOH are added, preferably separately, to the charging end of the pipe, the materials or material mixtures for the production of soap optionally being heated in the pipe to a temperature of from 260°C to 300°C, preferably of from 280°C to 300°C, and the content in mineral oil and/or non-detergent fatty matter in the added scraps of edible fats and oils is less than one percent, preferably less than 0.5 percent.

6. The process according to any one of the claims 1 to 4, wherein for the production of granules of plastics materials,resin and hardener are added,preferably separately, to the charging end of the pipe, said components being heated to a temperature of 150°C at most or heated to a predetermined reaction temperature or cooled in an exothermal reaction, and the reaction mass is atomized for forming the granules.

7. A tubular treatment or reaction apparatus for the treatment or chemical or physical reaction of materials or material mixtures, in particular compounds, solutions, sludges or emulsions, one end of the apparatus being provided with charging means for the materials or material mixtures and the materials or material mixtures or reaction products being dicharged on the other end of the apparatus optionally following a thermal treatment, at least one helix being disposed in the pipe of the treatment apparatus extending in longitudinal direction and rotating, in particular for carrying out the process according to any one of the claims 1 to 6, wherein at least two perferably identically formed helixes (6) are disposed in the pipe (3) screwed into one another and performing an oscillating motion in relation to one another in the longitudinal direction of the pipe, (pressure) conveying means (16), preferably pressure pumps, being provided as the feeding means for the materials or material mixtures, and optionally, an expansion nozzle (2) is provided,preferably superposed or formed, on the discharge end of the pipe (3).

8. The apparatus according to claim 7, wherein for driving the helixes (6), a motor (20) whose rotating axis coincides with the pipe axis and which drives a rotatable shaft or swash plate (7) disposed in front of or on the fased end of the pipe on the motor side and extending at angles to the pipe or motor axis is provided, said helixes (6) being attached to said shaft or swash plate (7), in particular in diametrically opposed locations, each of said helixes (6) optionally being formed by part of a metal strip cabled or twisted in longitudinal direction and divided or cut apart in a neutral plane, i.e. a plane extending in the untwisted strip longitudinally and perpendicularly through the strip onto its wider surface.

9. The apparatus according to claim 7 or 8, wherein a heating means (17) or cooling means is formed in the pipe wall and/or on the pipe (3) or the pipe (3) itself consists of a posistor material and/or the pipe (3) is heated by means of hot steam, hot exhaust gases or the like.

10. The apparatus according to any one of the claims 7 to 9, wherein a control means (21) for regulating the temperature and/or the pressure in the pipe and/or the amount of material charged is connected to the feeding means (16) or the heating or cooling means (17).

11. The apparatus according to any one of the claims 7 to 10, wherein the pipe (3) is provided with further feeding means or component inlets (14) for the preferably pressurized charging of protective gases and/or protective liquids and/or optionally heated air and/or catalysts and/or pigments and/or plasticizers and/or other additives, the pipe (3) optionally being provided for the production of soap from scraps of edible fats or oils with a separate component inlet (4) for the scraps of the edible fats or oils and a separate component inlet (5) for an alkaline solution, for instance KOH, NaOH, LiOH.

12. The apparatus according to any one of the claims 7 to 11, wherein a collecting or expansion container (1) is connected downstream from the discharge end of the pipe for expanding and collecting the materials or material mixtures or reaction products discharged from the pipe (3), a discharge means (18), for instance a conveyor screw, or a lock (13), optionally being provided in the lower region of the collecting container (1),into which lock (13) a collecting chamber (15) conveniently filled with protective gas or protective liquid empties.

13. The apparatus according to any one of the claims 7 to 12, wherein a steam or vapor condenser (22) and/or a suction means is provided downstream from the pipe (3) or the collecting or expansion space (1).

14. The apparatus according to any one of the claims 7 to 13, wherein the cross section, or diameter of the nozzle is changeable or adjustable, in particular for adjusting a desired particle size of the reaction products, by means of an adjusting means (19), and/or the nozzle (2) has a diameter of from 0.1 to 6 mm, and/or the length of the pipe (3) is from 0.2 to 2 meters and the inner diameter of the pipe (3) is from 8 to 20 mm.

15. The apparatus according to any one of the claims 7 to 14, wherein the pipe (3) is provided with a material inlet instead of the feeding means for expelling a solvent, for instance for salt production or for evaporating a component of a substance, for instance in distilling spirits.

16. The apparatus according to any one of the claims 7 to 15, wherein the pipe (3) is connected downstream to a plastics material extruder to whose material feeding connection the discharge end of the pipe (3) is connected.

## Revendications

1. Procédé de traitement chimique ou physique de matériaux ou mélanges de matériaux, en particulier de composés, solutions, boues ou émulsions, lesdits matériaux ou mélanges de matériaux étant amenés à une extrémité d'un dispositif de traitement ou de réaction tubulaire et évacués à l'autre extrémité, avantageusement après traitement thermique, et les matériaux ou mélanges de matériaux étant brassés et transportés dans le tube du dispositif de traitement au moyen d'au moins une spirale cylindrique en rotation dans le tube du dispositif de traitement, caractérisé en ce que les matériaux ou mélanges de matériaux sont brassés et transportés dans le tube au moyen d'au moins deux spirales cylindriques imbriquées l'une dans l'autre, disposées longitudinalement dans le tube et décrivant un mouvement oscillatoire l'une par rapport à l'autre, que les matériaux ou mélanges de matériaux sont amenés en continu dans le tube, avantageusement sous pression, et que les matériaux ou mélanges de matériaux traités, ayant terminé leur réaction, ou les produits de la réaction arrivant à la sortie du tube sont, le cas échéant, évacués par une buse ou sont atomisés.

2. Procédé selon la revendication 1, caractérisé en ce que les matériaux ou mélanges de matériaux sont introduits sous une pression de 2 à 200 bars, avantageusement entre 5 et 150 bars et/ou qu'un gaz protecteur, un liquide protecteur, des catalysateurs, des pigments, des plastifiants et/ou autres additifs sont ajoutés aux matériaux ou mélanges de matériaux dans le tube.

3. Procédé selon la revendication 1 ou 2, caractérisé en ce que, en particulier après expansion des éléments gazeux, les matériaux ou mélanges de matériaux ou produits de réaction sortant du tube sont introduits dans une atmosphère de gaz protecteur, p.ex. CO₂, ou dans un liquide protecteur.

4. Procédé selon une des revendications 1 à 3, caractérisé en ce que les spirales cylindriques tournent dans le tube selon une vitesse de rotation de 0,5 à 25 tr/mn.

5. Procédé selon une des revendications 1 à 4, caractérisé en ce que, pour la fabrication de savon, des résidus de graisses alimentaires ou huiles alimentaires et une lessive, avantageusement KOH, NaOH ou LiOH, sont introduits par l'extrémité d'alimentation du tube, en particulier séparément, les matériaux ou mélanges de matériaux servant à la fabrication du savon étant le cas échéant chauffés dans le tube à une température comprise entre 260° et 300°, avantageusement entre 280° et 300°C et, le cas échéant, la teneur en huile minérale et/ou en éléments non saponifiables des résidus de graisses alimentaires ou huiles alimentaires étant inférieure à 1%, avantageusement inférieure à 0, 5%.

6. Procédé selon une des revendications 1 à 4, caractérisé en ce que, pour la fabrication de granulés de matière plastique, la résine et le durcisseur sont amenés, en particulier séparément, à l'entrée du tube, ces composants étant soit chauffés à une température maximale de 150° ou à la température de réaction prescrite, soit refroidis en cas de réaction exotherme, et que le produit provenant de la réaction est atomisé pour obtenir un granulé.

7. Dispositif tubulaire de traitement ou de réaction pour le traitement ou la réaction chimique ou physique de matériaux ou mélanges de matériaux, en particulier de composés, solutions, boues ou émulsions, à une extrémité duquel sont prévus des dispositifs d'amenée des matériaux ou mélanges de matériaux, tandis que les matériaux ou mélanges de matériaux ou produits de réaction sont évacués à l'autre extrémité, le cas échéant après avoir subi un traitement thermique, le tube du dispositif de réaction comportant au moins une spirale cylindrique disposée longitudinalement et subissant un mouvement de rotation, en particulier pour la réalisation du procédé selon une des revendications 1 à 6, caractérisé en ce que au moins deux spirales cylindriques (6), de formes avantageusement identiques, sont disposées longitudinalement dans le tube (3), imbriquées l'une dans l'autre, et décrivent un mouvement oscillatoire l'une par rapport à l'autre, que l'amenée des matériaux ou mélanges de matériaux est assurée par des dispositifs d'alimentation continus (sous pression) (16), avantageusement des pompes refoulantes, et que, le cas échéant, une buse d'expansion (2) est disposée à la sortie du tube (3), ladite buse étant avantageuse ment une buse rapportée ou bien l'extrémité du tube formant buse.

8. Dispositif selon la revendication 7, caractérisé en ce que l'entraînement des spirales cylindriques (6) est assuré par un moteur (20) dont l'axe de rotation est aligné sur l'axe du tube, ledit moteur entraînant un disque en nutation (7) ou axe rotatif faisant un angle avec l'axe du tube et du moteur, disposé en avant de l'extrémité biseautée du tube côté moteur et reposant sur cette extrémité, auquel les spirales cylindriques (6) sont fixées, en particulier en des points diamétralement opposés, les spirales cylindriques (6) étant constituées le cas échéant chacune par une partie d'un ruban métallique enroulé ou vrillé dans le sens longitudinal et partagé ou coupé le long d'un plan neutre, autrement dit dans un plan qui serait situé dans le sens longitudinal du ruban non vrillé, perpendiculairement à sa surface la plus large.

9. Dispositif selon la revendication 7 ou 8, caractérisé en ce qu'un dispositif de chauffage (17) et/ou un dispositif de refroidissement sont prévus dans la paroi du tube et/ou sur le tube (3) ou que le tube (3) lui-même est formé d'un matériau conducteur du froid et/ou que le tuyau (3) est chauffé au moyen de vapeur surchauffée, de gaz d'échappement chauds ou autres.

10. Dispositif selon une des revendications 7 à 9, caractérisé en ce qu'un dispositif de commande (21) pour le réglage de la température et/ou de la pression dans le tube et/ou de la quantité de matériau introduite dans le tube est raccordé aux dispositifs d'alimentation (16) et au dispositif de chauffage et/ou de refroidissement (17).

11. Dispositif selon une des revendications 7 à 10, caractérisé en ce que le tube (3) est doté d'autres dispositifs d'alimentation ou d'amenée de constituants (14) pour l'introduction, avantageusement sous pression, de gaz de protection et/ou de liquides de protection et/ou, le cas échéant, d'air réchauffé et/ou de catalyseurs et/ou de pigments et/ou de plastifiants et/ou d'autres additifs, ledit tube (3) comportant le cas échéant, lorsqu'il doit être utilisé pour la fabrication de savon à partir de résidus de graisses alimentaires et/ou d'huiles alimentaires, une alimentation séparée (4) pour les résidus de graisses alimentaires ou d'huiles alimentaires et une alimentation séparée (5) pour une lessive, p.ex. KOH, NaOH ou LiOH.

12. Dispositif selon une des revendications 7 à 11, caractérisé en ce que la sortie du tube est raccordée à un vase de réception ou d'expansion (1) dans lequel les matériaux ou mélanges de matériaux ou produits de réaction sortant du tube (3) sont expansés ou collectés, le vase de réception ou d'expansion (1) comportant le cas échéant en partie inférieure un dispositif d'évacuation (18), p.ex. une vis sans fin ou un sas (13), ledit sas (13) débouchant dans une chambre de réception (15) avantageusement remplie de gaz de protection ou d'un liquide de protection.

13. Dispositif selon une des revendications 7 à 12, caractérisé en ce que le tube (3) ou le vase de réception ou d'expansion (1) est raccordé à un condenseur de vapeur ou de buées (22) et/ou un dispositif d'aspiration.

14. Dispositif selon une des revendications 7 à 13, caractérisé en ce que la section ou le diamètre de la buse est variable ou réglable au moyen d'un dispositif de réglage (19), en particulier pour être ajusté(e) sur la dimension demandée des particules du produit de réaction, et/ou que le diamètre de la buse (2) est compris entre 0,1 et 6 mm et/ou que la longueur du tube (3) est comprise entre 0,5 et 2 m et que la lumière du tube (3) est comprise entre 8 et 20 mm.

15. Dispositif selon une des revendications 7 à 14, caractérisé en ce que lorsque l'utilisation envisagée est l'extraction d'un dissolvant, p.ex. pour l'obtention de sel, ou l'évaporation d'un composant d'un matériau, p.ex. pour la distillation de l'eau-de-vie, le tube (3) comporte simplement un orifice d'admission au lieu des dispositifs d'alimentation.

16. Dispositif selon une des revendications 7 à 15, caractérisé en ce qu'une extrudeuse pour matières plastiques fait suite au tube (3), la sortie du tube (3) étant raccordée à l'entrée de l'extrudeuse.
